# EUROPÄISCHE PATENTSCHRIFT

(11) **EP 2 423 013 B1**
(45) Veröffentlichungstag und Bekanntmachung des Hinweises auf die Patenterteilung: **25.11.2015**
(21) Anmeldenummer: 10008840.0
(22) Anmeldetag: 25.08.2010
(51) Int. Cl.: B60H 1/00

(54) **Luftstromverteilungsvorrichtung**
Air flow distribution device
Dispositif de répartition de flux d'air

(43) Veröffentlichungstag der Anmeldung: 29.02.2012
(73) Patentinhaber: Truma Gerätetechnik GmbH & Co. KG, 85640 Putzbrunn (DE)
(72) Erfinder: Laging, Johannes, 81829 München (DE); Kahl, Wolfgang, 80933 München (DE); Deißenböck, Thomas, 83052 Bruckmühl (DE)
(74) Vertreter: Prinz & Partner mbB

(56) Entgegenhaltungen:
- EP-A2- 1 312 493
- DE-B3- 10 261 081
- US-A- 3 343 473
- US-A- 3 680 468
- US-A1- 2007 123 159
- US-A1- 2008 083 241

## Beschreibung

Die Erfindung betrifft eine Luftstromverteilungsvorrichtung, die insbesondere in Verbindung mit einem Dachklimagerät bei einem Caravan oder Reisemobil genutzt werden kann.

Dachklimageräte für Reisemobile, Caravans oder auch andere Fahrzeuge werden meist als komplette Einheiten auf der Oberseite des Fahrzeugs angeordnet. Sie weisen einen vollständigen Kältekreislauf einschließlich Kompressor, Verdampfer und Verflüssiger auf. Der als Wärmetauscher dienende Verdampfer wird von einem Luftstrom durchströmt, der durch den Verdampfer gekühlt und als Kaltluftstrom in das Innere des Fahrzeugs gleitet werden kann.

Der Luftstrom wird durch ein Gebläse, zum Beispiel ein Radialgebläse, erzeugt. Dazu kann Luft aus dem Fahrzeuginneren oder auch aus der Umgebung angesaugt und - nach Passieren des Verdampfer-Wärmetauschers - wieder in das Fahrzeuginnere rückgeführt werden.

Um für die Fahrzeuginsassen ein möglichst gutes Komfortgefühl zu erreichen, ist es erstrebenswert, dass die Kaltluft zugfrei eingeleitet wird. Zudem ist es gerade bei größeren Innenräumen sinnvoll, die Kaltluft nicht nur an einer, sondern an mehreren Stellen auszublasen.

Zu diesem Zweck ist aus der US 3,680,468 eine Luftstromverteilungsvorrichtung bekannt, bei der ein von einem Dachklimagerät bzw. einem dort vorgesehenen Gebläse kommender Kaltluftstrom senkrecht von oben eingeblasen und nachfolgend durch die Luftstromverteilungsvorrichtung über zwei Öffnungen, nämlich einen vorderen und einen hinteren Luftauslass ausgelassen wird. Um den Luftstrom auf die beiden Auslässe zu verteilen, ist ein keilförmiges Element im Luftstrom angeordnet, das den Luftstrom aufteilt. Das keilförmige Element kann verschoben werden, um die Aufteilung des Luftstroms nach vorne u. nach hinten zu verändern.

Aus der US 3,680 468 ist eine Luftstromverteilungsvorrichtung mit einer Führungseinrichtung für einen Luftstrom gezeigt, wobei die Führungseinrichtung mit einem nachgiebigen Schaummaterial beschichtet ist.

Aus der US 2007/0123159 A1 ist ein Gebläse bekannt, das mit einer Absperrklappe versehen ist. Die Klappe kann aus einem Kunststoffschaum bestehen und weist Öffnungen auf. Es ist ein Folienmaterial vorgesehen, welches diese Öffnungen verschließt.

Für das Komfortempfinden der Fahrzeuginsassen ist neben einer ausgewogenen Kälteverteilung und einer Zugfreiheit der Luftströme auch die Geräuschentwicklung maßgeblich. Neben den Geräuschen, die durch das eigentliche Dachklimagerät und die dort vorhandenen Aggregate (insbesondere Kompressor, Verflüssigergebläse, Verdampfergebläse) erzeugt werden, spielt auch die Geräuschentwicklung an dem Luftstromverteiler eine nicht unerhebliche Rolle. Der Luftstromverteiler befindet sich in der Regel an der Fahrzeugdecke im Innenraum des Fahrzeugs und damit wegen der üblicherweise geringen Raumhöhe vergleichsweise nahe an den Köpfen der Insassen. Die Luftausströmöffnungen werden dementsprechend meist möglichst flach gestaltet. Laute Strömungsgeräusche können von den Insassen als störend empfunden werden.

Der Erfindung liegt die Aufgabe zugrunde, eine Luftstromverteilungsvorrichtung, insbesondere für ein Dachklimagerät, vorzusehen, bei dem die Entwicklung von Luftströmungsgeräuschen verringert ist.

Die Aufgabe wird erfindungsgemäß durch eine Luftstromverteilungsvorrichtung nach Anspruch 1 gelöst. Die Lösungen können auch wirkungsvoll miteinander kombiniert werden. Vorteilhafte Ausgestaltungen ergeben sich aus den abhängigen Ansprüchen.

Erfindungsgemäß wird eine Luftstromverteilungsvorrichtung mit dem Luftführungsgehäuse, dem Verzweigungsbereich und der in dem Verzweigungsbereich vorgesehenen Luftstromteilereinrichtung angegeben, wobei die Luftstromteilereinrichtung für jeden der Luftauslasskanäle jeweils eine Führungseinrichtung aufweist, zum Führen des jeweiligen Luftstroms in den betreffenden Luftauslasskanal, und die Führungseinrichtung wenigstens eine den Luftstrom führende Teilfläche mit einer schalldämpfenden Oberfläche aufweist.

Bei dieser Variante ist es zunächst nicht vorgesehen, die Strömungsgeschwindigkeit innerhalb des Luftstroms zu vergleichmäßigen. Wenigstens eine Teilfläche der Führungseinrichtung, gegebenenfalls aber auch die gesamte Führungseinrichtung weist eine schalldämpfende Oberfläche auf, um die Geräuschentwicklung beim Umlenken des Luftstroms zu mindern. Die schalldämpfende Oberfläche "schluckt" Geräusche, die durch die Luftströmung in der Luftstromverteilungsvorrichtung entstehen, sodass die Geräusche für die Fahrzeuginsassen als weniger unangenehm empfunden werden. Darüber hinaus dämpft die Oberfläche auch Geräusche, die in stromauf liegenden Komponenten entstehen können, z.B. Strömungsgeräusche in einem stromauf angeordneten Gebläse oder in den zuführenden Luftkanälen.

Die Teilfläche und/oder die gesamte Führungseinrichtung sind aus einem offenporigen Schaummaterial gebildet. Offenporige Schaummaterialien haben sich als besonders geeignete Materialien mit schalldämpfenden Eigenschaften erwiesen. Die Schallwellen dringen in die offenen Poren des Schaummaterials ein und "verlaufen sich" in diesen.

Weiterhin ist das offenporige Schaummaterial mit einem Folienmaterial beschichtet ist. Bei einem offenporigen Schaummaterial kann das Problem eines Feuchtigkeitsniederschlags entstehen, der das Entstehen von Bakterien und damit verbundenen Gerüchen bzw. allgemeinen Hygieneproblemen nach sich zieht. Durch das Beschichten des Schaummaterials mit einer Folie kann das Eindringen von Feuchtigkeit vermindert werden. Wenn die Folie entsprechend dünn gehalten ist, bewirkt sie immer noch eine hinreichende Schalldämpfungswirkung.

Die Führungseinrichtung kann durch einen Körper gebildet sein bzw. einen Körper aufweisen, der aus dem Schaummaterial hergestellt ist.

Es kann eine Kanalstruktur vorgesehen sein, die mehrere Teilkanäle zum Führen von Teilluftströmen des Luftstroms in den betreffenden Luftauslasskanal aufweist. Die Querschnitte beziehungsweise Querschnittsverläufe der Teilkanäle können derart bemessen sein, dass die Strömungsgeschwindigkeiten der sie durchströmenden Teilluftströme am Austritt aus den Teilkanälen einander angenähert sind, insbesondere im Verhältnis zu einer Anordnung, bei der keine Kanalstruktur vorgesehen ist.

Die Strömungsgeschwindigkeiten können durch die Kanalstruktur somit gegenüber einem Fall, in dem keine Kanalstruktur vorhanden ist, einander angenähert werden, so dass der Geschwindigkeitsgradient innerhalb des Strömungsgeschwindigkeitsprofils verringert wird.

Somit dient die Luftstromteilereinrichtung nicht nur dazu, den zunächst eintretenden einen Luftstrom auf wenigstens zwei zu den Luftauslässen führende Luftströme aufzuteilen und dabei gegebenenfalls die Luftströme umzuleiten. Vielmehr dient die Kanalstruktur auch zum Vergleichmäßigen der Strömungsgeschwindigkeiten bereits innerhalb der Luftstromverteilungsvorrichtung, wodurch die Geräuschentwicklung vermindert werden kann.

Es hat sich herausgestellt, dass die Geräuschentwicklung in der Luftstromverteilungsvorrichtung erheblich gemindert werden kann, wenn die Luftströmung möglichst gleichmäßig, also mit möglichst gleichmäßiger Strömungsgeschwindigkeitsverteilung erfolgt. Am Einlass hingegen ist die Luftströmung durch das stromauf gelegene Gebläse - zum Beispiel ein Radialgebläse - stark ungleichförmig. Das Strömungsprofil und die Gleichförmigkeit der Geschwindigkeiten ist von der zuführenden Kanalform und vom Abstand zu dem stromauf liegenden Gebläse bzw. Lüfter abhängig. Da prinzipiell sparsam mit dem Bauraum umgegangen werden muss, sind die Strömungswege in der Regel relativ kurz. Die Umlenkung beziehungsweise Aufteilung des Luftstroms in der Luftstromverteilungsvorrichtung erfolgt ebenfalls auf sehr kleinem Raum. Dabei ist es zweckmäßig, wenn die Luftströmung schon während der Umlenkung vergleichmäßigt wird.

Zu diesem Zweck können in der Kanalstruktur mehrere Teilkanäle ausgebildet sein, die den zu führenden Luftstrom in mehrere Teilluftströme aufteilen. Jeder der Teilkanäle ist derart gestaltet, dass der von ihm geführte Teilluftstrom am Ende des Teilkanals eine Strömungsgeschwindigkeit aufweist, die den Strömungsgeschwindigkeiten der anderen Teilluftströme, die die anderen Teilluftkanäle verlassen, angenähert ist oder gar entspricht.

Die Führungseinrichtungen haben darüber hinaus die Aufgabe, die jeweiligen Luftströme - z.B. in entgegengesetzte Richtungen - umzulenken und auf diese Weise den Luftströmungen wenigstens im Groben die Richtung zu geben, die die Luftströme bei Verlassen der Luftstromverteilungsvorrichtung aufweisen sollen.

Die Kanalstruktur kann auf wenigstens einer der Führungseinrichtungen ausgebildet sein. Das bedeutet, dass die jeweilige Führungseinrichtung die Teilkanäle trägt, so dass der von der Führungseinrichtung zu führende bzw. umzulenkende Luftstrom in die mehreren Teilkanäle aufgeteilt wird.

Die Kanalstruktur kann aber auch stromauf oder stromab von der Führungseinrichtung bzw. der Luftstromteilereinrichtung angeordnet sein.

Der Querschnitt von wenigstens einem der Teilkanäle kann sich in Strömungsrichtung derart vergrößern, dass die Strömungsgeschwindigkeit des ihn durchströmenden Luftstroms in Strömungsrichtung abnimmt. Auf diese Weise ist es möglich, die Geschwindigkeit von Teilluftströmen zu reduzieren, die eine überdurchschnittliche Strömungsgeschwindigkeit aufweisen.

Teilluftströme hingegen, die bereits eine relativ niedrige Geschwindigkeit aufweisen, erfordern unter Umständen nur eine Richtungsumlenkung durch die Führungseinrichtung, nicht jedoch eine Veränderung der Strömungsgeschwindigkeit. Ebenso ist es auch möglich, dass die Querschnitte der Teilkanäle in Strömungsrichtung verringert werden, um eine Erhöhung der Strömungsgeschwindigkeit zu erreichen. Dies bedeutet aber in der Regel auch eine Erhöhung der Geräuschentwicklung und die Gefahr eines Zugempfindens für die Fahrzeuginsassen.

Somit können auf einer Führungseinrichtung Teilkanäle vorgesehen sein, die lediglich den von ihnen geführten Teilluftstrom umlenken, sowie Teilkanäle, die außer einer Umlenkung des Teilluftstroms auch eine Veränderung, insbesondere Verringerung der Strömungsgeschwindigkeit bewirken. In letzterem Fall dienen die Teilkanäle dann auch als Diffusor.

Die Führungseinrichtung kann eine Luftführungsfläche aufweisen, wobei die Kanalstruktur Rippen aufweist, die auf der Luftführungsfläche ausgebildet sind. Die Luftführungsfläche dient somit als Träger bzw. Basis für die Rippen und bewirkt im Wesentlichen die gewollte Umlenkung der Luftströmung. Die Rippen hingegen können die Veränderung der Querschnitte und Querschnittsverläufe erzielen, soweit dies vom Konstrukteur gewollt ist.

Der Abstand der Rippen zueinander und/oder der Verlauf der Rippen in Strömungsrichtung kann derart gestaltet sein, dass die Strömungsgeschwindigkeiten der die Zwischenräume zwischen den Rippen durchströmenden Teilluftströme am Austritt aus den Teilkanälen im Wesentlichen gleich sind. Dementsprechend wird - wie oben schon beschrieben - die Veränderung des Querschnitts eines Teilkanals dadurch erreicht, dass der Abstand der den Teilkanal mitbildenden Rippen zueinander verändert wird.

Zudem können die Teilluftströme in den Teilkanälen eine von einer Hauptströmungsrichtung abweichende Strömungsrichtung aufweisen. Das bedeutet, dass die Teilluftströme zusätzlich zu der Hauptströmungsrichtung auch eine Strömungskomponente quer zur Hauptströmungsrichtung aufweisen. Dies macht vor allem dann Sinn, wenn der betreffende Teilluftstrom eine verhältnismäßig hohe Strömungsgeschwindigkeit aufweist, die verringert werden soll. Durch die Querkomponente der Luftströmung kann sich der Teilluftstrom ausbreiten, was eine Verringerung seiner Strömungsgeschwindigkeit nach sich zieht (Diffusorwirkung).

Das Luftführungsgehäuse kann aus mehreren Komponenten zusammengesetzt werden, so aus eigentlichen Hohlräumen und aus Kanalelementen.

Stromauf von dem Lufteinlass kann ein Luftgebläse zum Erzeugen des Luftstroms angeordnet werden. Das Luftgebläse selbst kann Bestandteil der Luftstromverteilungsvorrichtung sein. Ebenso ist es aber auch möglich, dass die Luftstromverteilungsvorrichtung separat von dem Luftgebläse stromab von diesem vorgesehen wird. Z.B. kann das Luftgebläse (z.B. ein Verdampfergebläse) außerhalb eines Fahrzeugs und die Luftstromverteilungsvorrichtung innerhalb des Fahrzeugs angeordnet sein.

Der in den Lufteinlass eintretende Luftstrom kann ein Strömungsprofil mit unterschiedlichen Strömungsgeschwindigkeiten aufweisen, wobei der Abstand der Rippen der Teilkanäle zueinander grösser wird, je weiter die Rippen oder Rippenbereiche von dem Ort der höchsten Strömungsgeschwindigkeit entfernt sind.

Die Rippenverläufe können frei gestaltet werden, um die gewollte Vergleichmäßigung der Strömungsgeschwindigkeiten zu erreichen. Dabei kann berücksichtigt werden, dass das Strömungsprofil des vom Luftgebläse kommenden Luftstroms sehr inhomogen ist und Bereiche mit hoher Luftströmung und geringerer Luftströmung aufweist. Als Strömungsprofil wird die Geschwindigkeitsverteilung innerhalb des Luftstroms verteilt über seinen Querschnitt verstanden.

Es hat sich zum Beispiel herausgestellt, dass die Luftströmung bei einem Radialgebläse in der Nähe der Abrisskante besonders niedrig ist, während die Strömungsgeschwindigkeit radial nach außen zunimmt. Dieser inhomogenen Geschwindigkeitsverteilung im Luftstrom kann dadurch Rechnung getragen werden, dass der Gesamtluftstrom in die mehreren Teilluftströme aufgeteilt wird und jeder der Teilluftströme dann in einer Weise gestaltet ist, dass er die Strömungsgeschwindigkeit entweder verringert oder im Wesentlichen konstant hält, um am Ende, das heißt am Auslass, die gewünschte Vergleichmäßigung der Strömungsgeschwindigkeiten zu erreichen.

Schließlich wird eine Luftstromverteilungsvorrichtung angegeben, bei die oben genannten Merkmale kombiniert sind. Das bedeutet, dass die Führungseinrichtungen der Luftstromteilereinrichtung einerseits Teilkanäle bereitstellen, mit denen die Strömungsgeschwindigkeiten der einzelnen Teilluftströme harmonisiert werden kann. Zusätzlich können die Führungseinrichtungen auf wenigstens eine Teilfläche aufweisen, die mit einer schalldämpfenden Oberfläche versehen ist, um von vorne herein das Entstehen von Strömungsgeräuschen mindern.

Bei einer Variante kann die Luftstromteilereinrichtung derart bewegbar sein, dass die an der Luftstromteilereinrichtung angeordneten Einlassquerschnitte der Luftauslasskanäle veränderbar sind. Auf diese Weise kann eine Regelung der Luftströme, die die einzelnen Luftauslasskanäle durchströmen, erreicht werden.

Die Bewegung der Luftstromteilereinrichtung kann manuell oder auch durch einen Servoantrieb (z.B. motorisch oder durch ein Stellglied), gegebenenfalls gesteuert durch eine Steuerung, erfolgen.

Insbesondere kann die Luftstromteilereinrichtung derart bewegt werden, dass jeweils einer der Einlassquerschnitte bzw. Einlassöffnungen der Luftauslasskanäle vollständig verschließbar ist, während der andere der Einlassquerschnitte vollständig öffenbar ist. Dadurch kann erreicht werden, dass die Kaltluft vom Dachklimagerät gezielt nur an einer Stelle ausgelassen wird, während der andere Bereich des Raumes nicht mit Kaltluft versorgt wird.

Die Luftstromteilereinrichtung kann dabei insbesondere linear hin- und herbewegbar ausgestaltet sein.

Diese und weitere Vorteile und Merkmale der Erfindung werden nachfolgend anhand eines Beispiels unter Zuhilfenahme der begleitenden Figuren näher erläutert. Es zeigen:
- **Fig. 1**: eine Luftstromverteilungsvorrichtung in schematischer Perspektivansicht;
- **Fig. 2**: eine Schnittdarstellung der Luftstromverteilungsvorrichtung,
- **Fig. 3**: eine detaillierte Perspektivansicht einer in der Luftstromverteilungsvorrichtung vorgesehenen Luftstromteilereinrichtung;
- **Fig. 4**: eine schematische Schnittdarstellung mit einem Luftgebläse und der Luftstromteilereinrichtung; und
- **Fig. 5**: eine Variante der Luftstromteilereinrichtung.

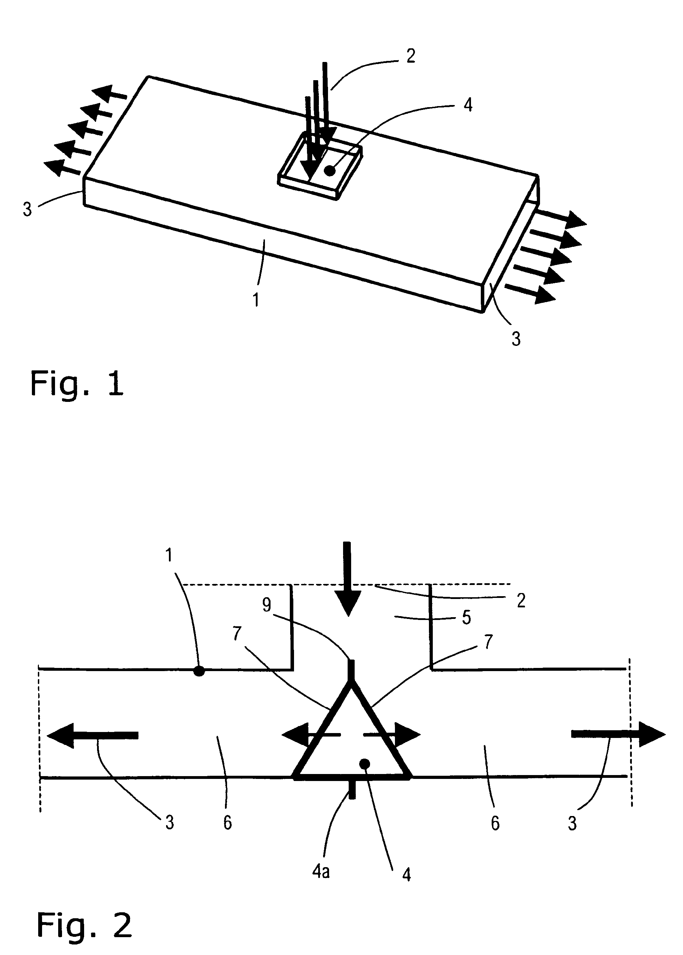

Fig. 1 zeigt in schematischer Perspektivansicht eine erfindungsgemäße Luftstromverteilungsvorrichtung.

Die Luftstromverteilungsvorrichtung kann zum Beispiel unterhalb eines üblichen Dachklimageräts vorgesehen werden. Insbesondere wird eine derartige Luftstromverteilungsvorrichtung am Dachhimmel eines Reisemobils, Caravans oder einer Fahrzeugkabine angebracht, um die von dem Dachklimagerät von oben nach unten geführte Luft seitlich umzulenken und in verschiedene Bereich des Raumes zu führen.

Zu diesem Zweck weist die Luftstromverteilungsvorrichtung ein Luftführungsgehäuse 1 mit einem Lufteinlass 2 und zwei Luftauslässen 3 auf. Ohne weiteres können auch mehrere Lufteinlässe oder Luftauslässe vorgesehen werden, wenn dies sinnvoll ist. In der Regel wird aber die in Fig. 1 gezeigte Anordnung genügen, bei der ein von dem nicht dargestellten Dachklimagerät kommender Luftstrom über den Lufteinlass 2 in das Luftführungsgehäuse 1 eingebracht und dort in zwei Luftströme aufgeteilt wird, die über die beiden Luftauslässe 3 das Luftführungsgehäuse 1 verlassen (s. a. Pfeile in Fig. 1 und 2).

Die Querschnittsfläche des Lufteinlasses 2 kann kleiner sein als der Gesamtquerschnitt aller Luftauslässe 3.

Im Inneren des Luftführungsgehäuses 1 ist eine Luftstromteilereinrichtung 4 vorgesehen, die eine Verzweigung des über den Einlass 2 eintretenden Luftstroms bewirkt.

Dieser Zusammenhang ist in der schematischen Schnittdarstellung von Fig. 2 erkennbar.

Dort ist gezeigt, dass die Luftstromteilereinrichtung 4 in einem Verzweigungsbereich des Luftführungsgehäuses 1 angeordnet ist, in dem ein von dem Einlass 2 kommender Lufteinlasskanal 5 in zwei Luftauslasskanäle 6 verzweigt wird.

Die Luftstromteilereinrichtung 4 dient als Regelelement und kann zum Beispiel linear hin und her verschiebbar sein, wie durch Pfeile in Fig. 2 symbolisiert. Zum manuellen Verschieben der Luftstromteilereinrichtung 4 kann ein Bediener z.B. ein Betätigungselement 4a linear verschieben. Durch das Verschieben der Luftstromteilereinrichtung 4 können die Einlassquerschnitte der beiden Luftauslasskanäle 6 verändert werden, sodass die dem jeweiligen Luftauslasskanal 6 zuführbare Luft eingestellt werden kann.

In dem in Fig. 2 gezeigten Beispiel ist der Einlassquerschnitt des linken Luftauslasskanals 6 kleiner als der Einlassquerschnitt des rechten Luftauslasskanals 6, weil die Luftstromteilereinrichtung 4 etwas nach links verschoben ist.

Auf der Luftstromteilereinrichtung ist für jeden Luftauslasskanal 6 eine Führungseinrichtung 7 vorgesehen, die ein Umleiten des Luftstroms in Richtung des Luftauslasskanals 6 bewirkt.

Die Führungseinrichtung 7 kann - wie in Fig. 2 gezeigt - eine simple schräg stehende oder auch konkav gewölbte Führungsfläche sein. Erfindungsgemäß ist es aber vorgesehen, dass die Führungseinrichtungen 7 in besonderer Weise ausgestaltet sind.

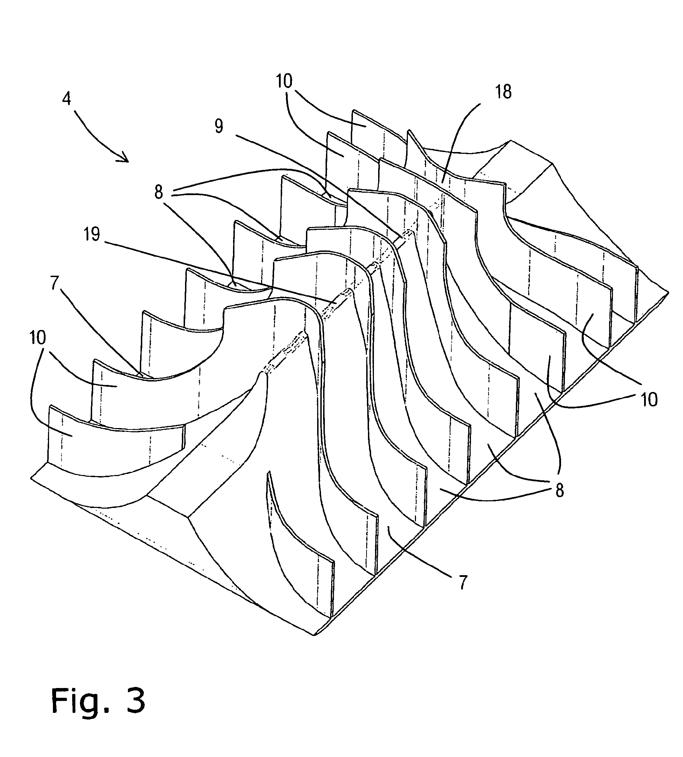

Fig. 3 zeigt eine Variante der Luftstromteilereinrichtung 4, bei der die Führungseinrichtungen 7 jeweils eine Kanalstruktur mit mehreren Teilkanälen 8 aufweisen. Die Teilkanäle 8 dienen zum Führen von Teilluftströmen des gesamten Luftstroms, der in den zugeordneten Luftauslasskanal 6 geführt werden soll.

An der Oberseite der Luftstromteilereinrichtung 4 ist eine Trennkante 9 ausgebildet, die den über den Lufteinlasskanal 5 zugeführten Luftstrom aufteilt und in die beiden Hälften der Luftstromteilereinrichtung 4 verteilt. Dort werden die beiden Luftströme durch die Führungseinrichtung 7 weitergeführt und insbesondere in Teilluftströme aufgeteilt, die durch die jeweiligen Teilkanäle 8 strömen.

Die Teilkanäle 8 sind seitlich durch Rippen 10 begrenzt, von denen in Fig. 3 nur einige mit Bezugszeichen gekennzeichnet sind.

Die Teilkanäle 8 können in der in Fig. 3 gezeigten Weise durch die Rippen 10 gebildet sein. Ebenso ist es möglich, dass die Teilkanäle auch als vollständig umschlossene, als auch an der Oberseite abgedeckte Kanäle ausgebildet sind, die lediglich am Einlass und am Auslass geöffnet sind.

Die Rippen 10 können mit gleichmäßigen Abstand und relativ gerade ausgebildet sein.

Fig. 3 zeigt jedoch eine Variante, bei der die Verläufe der Rippen komplexer ausgestaltet sind. Dieser Gestaltung liegt die Überlegung zugrunde, dass die Querschnitte und Querschnittsverläufe der Teilkanäle 8 derart bemessen sein können, dass die Strömungsgeschwindigkeiten der sie durchströmenden Teilluftströme am Austritt aus den Teilkanälen 8, also dann, wenn die Teilluftströme an der in Fig. 3 gezeigten Luftstromteilereinrichtung 4 vorbeigeströmt sind, im Wesentlichen gleich sind.

Zu diesem Zweck wird bei der Gestaltung der Luftstromteilereinrichtung 4 berücksichtigt, dass der über den Lufteinlasskanal 5 senkrecht von oben einströmende Luftstrom eine inhomogene Verteilung der Strömungsgeschwindigkeit, also ein inhomogenes Strömungsprofil aufweist.

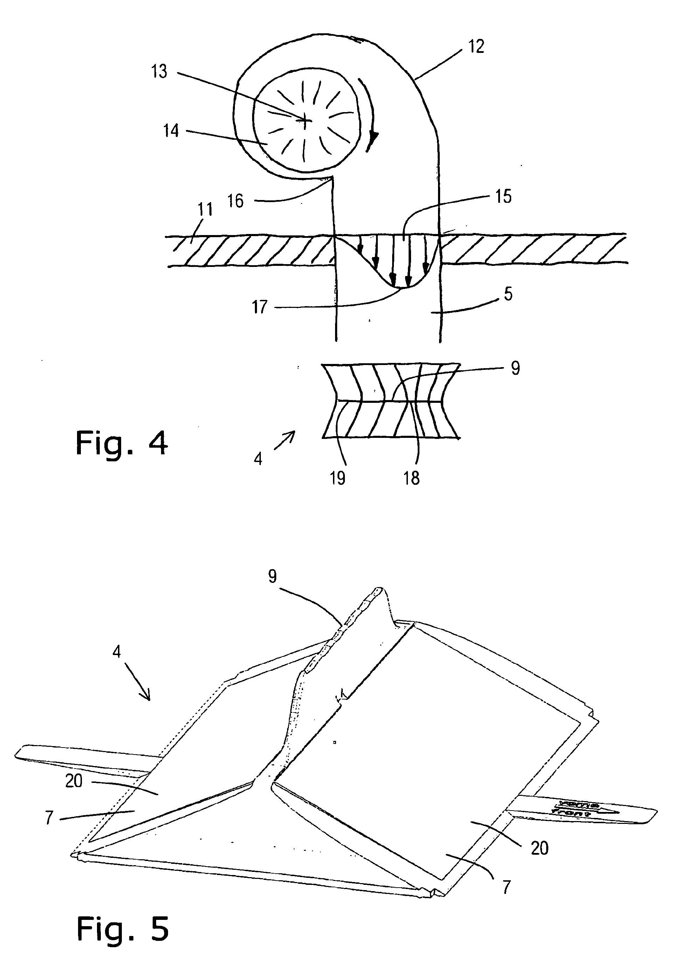

Fig. 4 zeigt ein Beispiel, wie ein derartiges inhomogenes Strömungsprofil entstehen kann. Dargestellt ist ein Schnitt durch ein Fahrzeugdach 11.

Unterhalb des Fahrzeugdachs 11 ist die Luftstromverteilungsvorrichtung angeordnet, von der jedoch nur die Luftstromteilereinrichtung 4 gezeigt ist. Diese ist jedoch um 90° in die Zeichenebene geklappt, was daran erkannt werden kann, dass die Trennkante 9 nicht - wie in den Fig. 2 und 3 - auf der Oberseite vorgesehen sondern zum Betrachter hin gerichtet ist. Insoweit zeigt der untere Teil von Fig. 4 eine schematische Draufsicht auf die Luftstromteilereinrichtung 4

Oberhalb von dem Fahrzeugdach 11 ist ein Radialgebläse 12 angeordnet. Eine Drehachse 13 eines Lüfterrads 14 des Radialgebläses 12 erstreckt sich senkrecht zu der Trennkante 9 und damit zum Beispiel in Richtung der Luftauslasskanäle 6, die jedoch in Fig. 4 nicht gezeigt sind.

Für ein Radialgebläse ist es typisch, dass der das Radialgebläse 12 verlassende Luftstrom ein inhomogenes Strömungsprofil aufweist. So weist der Luftstrom in Fig. 4 ein Strömungsprofil 15 auf, bei dem die Luftströmung in der Nähe einer Abrisskante 16 eine niedrigere Geschwindigkeit aufweist als in einem Bereich entfernt von der Abrisskante 16. Wie in Fig. 4 erkennbar, nimmt die Strömungsgeschwindigkeit mit zunehmender radialer Entfernung von der Drehachse 13 zu. Dementsprechend wird im Bereich eines Maximums 17 im Strömungsprofil 15 mehr Luft gefördert als in den Bereichen mit niedrigerer Geschwindigkeit.

Bei der Gestaltung der in Fig. 3 gezeigten Luftstromteilereinrichtung 4 wird dieser Erkenntnis Rechnung getragen. So sind die Rippen 10 in dem Bereich, in dem mit der höchsten Strömungsgeschwindigkeit des Luftstroms gerechnet wird (entsprechend dem Maximum 17), derart gestaltet, dass die Abstände zwischen den Rippen 10 - insbesondere beim Eintritt in die Teilkanäle 8, nämlich an der Trennkante 8 - sehr viel enger gewählt als in Bereichen, die von dem Ort der maximalen Strömungsgeschwindigkeit entfernt sind.

Der Bereich, an dem die Querschnitte der Teilkanäle 8 am engsten und die Abstände der Rippen 10 zueinander am geringsten ist, ist mit 18 gekennzeichnet. Ein Beispiel für einen Ort mit größerem Rippenabstand und damit größeren Teilkanalquerschnitten trägt das Bezugszeichen 19.

Ausgehend von dem Ort 18 mit engem Teilkanalquerschnitt weiten sich die Teilkanäle 8 im Strömungsverlauf auf und dienen somit als Diffusor, um die Strömungsgeschwindigkeit der in diesen Teilkanälen 8 geführten Teilluftströme zu verringern. Die Teilkanäle 8, die bereits beim Eintritt einen großen Querschnitt aufweisen (zum Beispiel an der Stelle 19) benötigen keine Veränderung des Querschnitts, sodass ihr Querschnitt konstant gehalten werden kann. Dementsprechend dienen diese Teilkanäle nur zur Strömungsumlenkung, um die Luftströmung in einem rechten Winkel in den jeweiligen Luftauslasskanal 6 zu führen.

Um eine derartige Harmonisierung der Strömungsgeschwindigkeit innerhalb des Strömungsprofils zu erreichen, ist es erforderlich, dass die Teilluftströme wenigstens auch eine Strömungskomponente quer zur Hauptströmungsrichtung (Umlenkung zwischen Lufteinlasskanal 5 und Luftauslasskanal 6) erreichen.

Mit der Vergleichmäßigung der Strömungsgeschwindigkeiten wird eine deutliche Reduzierung der Geräuschentwicklung bewirkt, was den Komforteindruck verbessert.

Fig. 5 zeigt eine andere Ausführungsform der Luftstromteilereinrichtung 4.

Anstelle der Teilkanäle 8 bzw. Rippen 10 sind die jeweils als Führungseinrichtung 7 dienenden Führungsflächen gerade gehalten. Die Führungseinrichtungen 7 sind jedoch jeweils durch einen Schaumkeil 20 aus einem offenporigen Schaummaterial gebildet. Offenporiges Schaummaterial hat hervorragende Schalldämpfungseigenschaften, sodass die Strömungsgeräusche der durch die Schaumkeile 20 umgelenkten Luftströmung reduziert wird.

Zwischen den Führungseinrichtungen 7 bzw. Schaumkeilen 20 erstreckt sich die Trennkante 9, die eine gewellte Oberseite aufweisen kann, um die Luftströmung besser aufzuteilen.

Anstelle der in Fig. 5 gezeigten Schaumkeile 20 ist es auch möglich, die Luftstromteilereinrichtung 4 vollständig oder nur im Bereich der relevanten Teilflächen mit einem offenporigen Schaummaterial, zu beschichten.

Ebenso ist es möglich, die in den Fig. 3 und 5 gezeigten Varianten miteinander zu kombinieren. So können zum Beispiel die zwischen den Rippen 10 vorhandenen, die Teilkanäle 8 an der Unterseite begrenzenden Führungsflächen durch ein offenporiges Schaummaterial eine schalldämpfende Wirkung erreichen. Auch die Rippen 10 selbst können aus Schaummaterial hergestellt sein oder mit einem schalldämpfenden Material beschichtet sein.

Grundsätzlich ist es somit möglich, zum Erreichen einer Schalldämpfungswirkung eine Komponente vollständig aus einem schalldämpfenden Material herzustellen oder nur mit einem schalldämpfenden Material zu überziehen.

Das Schaummaterial ist mit einer Folie überzogen um das Eindringen von Feuchtigkeit in die Poren des Schaummaterials zu verhindern. Durch diese Maßnahme wird zwar der Schalldämpfungseffekt etwas gemindert, jedoch nicht gänzlich aufgehoben.

## Patentansprüche

1. Luftstromverteilungsvorrichtung für ein Fahrzeug, geeignet zur Verbindung mit einem Dachklimagerät bei einem Caravan oder Reisemobil, mit
- einem Luftführungsgehäuse (1) mit wenigstens einem von einem Lufteinlass (2) wegführenden Lufteinlasskanal (5) und wenigstens zwei, jeweils zu einem Luftauslass (3) führenden Luftauslasskanälen (6);
- einem Verzweigungsbereich, in dem der Lufteinlasskanal (5) zu den Luftauslasskanälen (6) verzweigt wird;
- einer in dem Verzweigungsbereich vorgesehenen Luftstromteilereinrichtung (4) zum Verteilen eines über den Lufteinlasskanal (5) zuführbaren Luftstroms auf die Luftauslasskanäle (6);
wobei
- die Luftstromteilereinrichtung (4) für jeden der Luftauslasskanäle (6) jeweils eine Führungseinrichtung (7) aufweist, zum Führen des jeweiligen Luftstroms in den betreffenden Luftauslasskanal (6); und wobei
- die Führungseinrichtung (7) wenigstens eine den Luftstrom führende Teilfläche mit einer schalldämpfenden Oberfläche aufweist,
**dadurch gekennzeichnet, dass**
die Teilfläche und/oder die zugehörige Führungseinrichtung (7) aus einem offenporigen Schaummaterial gebildet ist,
- und dass das offenporige Schaummaterial mit einem Folienmaterial beschichtet ist.

2. Luftstromverteilungsvorrichtung nach Anspruch 1, **dadurch gekennzeichnet, dass** ein die Führungseinrichtung (7) bildender Körper (20) aus einem Schaummaterial hergestellt ist.

3. Luftstromverteilungsvorrichtung nach einem der vorangehenden Ansprüche, **dadurch gekennzeichnet, dass** die Luftstromteilereinrichtung (4) bewegbar ist, derart, dass die an der Luftstromteilereinrichtung (4) angeordneten Einlassquerschnitte der Luftauslasskanäle (6) veränderbar sind.

4. Luftstromverteilungsvorrichtung nach einem der vorangehenden Ansprüche, **dadurch gekennzeichnet, dass** die Luftstromteilereinrichtung (4) derart bewegbar ist, dass jeweils einer der Einlassquerschnitte der Luftauslasskanäle (6) vollständig verschließbar ist, während der andere der Einlassquerschnitte vollständig öffenbar ist.

## Claims

1. An air flow distribution device for a vehicle, suitable for connecting with a roof air-conditioning unit in a caravan or motorhome, comprising
- an air guiding housing (1) having at least one air inlet duct (5) leading away from an air inlet (2) and at least two air outlet ducts (6) each leading to an air outlet (3);
- a branching area in which the air inlet duct (5) is branched to the air outlet ducts (6);
- an air flow divider means (4) provided in the branching area for distributing an air flow that can be supplied via the air inlet duct (5) to the air outlet ducts (6);
wherein
- the air flow divider means (4) includes one respective guide means (7) for each of the air outlet ducts (6), for guiding the respective air flow into the air outlet duct (6) in question; and wherein
- the guide means (7) includes at least one partial surface guiding the air flow and having a sound absorbing surface,
**characterized in that**
- the partial surface and/or the associated guide means (7) is formed from an open-cell foamed material,
- and **in that** the open-cell foamed material is coated with a film material.

2. The air flow distribution device according to claim 1, **characterized in that** a body (20) forming the guide means (7) is produced from a foamed material.

3. The air flow distribution device according to either of the preceding claims, **characterized in that** the air flow divider means (4) is movable such that the inlet cross-sections, arranged on the air flow divider means (4), of the air outlet ducts (6) are variable.

4. The air flow distribution device according to any of the preceding claims, **characterized in that** the air flow divider means (4) is movable such that one of the inlet cross-sections of the air outlet ducts (6) can be fully closed at a time while the respective other of the inlet cross-sections can be fully opened.

## Revendications

1. Dispositif de distribution de flux d'air pour véhicule, lequel se prête au raccordement à un appareil de climatisation de toit dans une caravane ou un camping-car, comportant
- un boîtier de guidage d'air (1) qui présente au moins un canal d'entrée d'air (5) qui s'étend en éloignement d'une entrée d'air (2), et au moins deux canaux de sortie d'air (6) qui mènent chacun vers une sortie d'air (3) ;
- une zone de ramification dans laquelle le canal d'entrée d'air (5) se ramifie vers les canaux de sortie d'air (6) ;
- un moyen diviseur (4) de flux d'air prévu dans la zone de ramification pour répartir un flux d'air qui peut être amené par le canal d'entrée d'air (5), entre les canaux de sortie d'air (6) ;
dans lequel
- le moyen diviseur (4) de flux d'air présente pour chacun des canaux de sortie d'air (6) un moyen de guidage (7) respectif pour guider le flux d'air respectif dans le canal de sortie d'air (6) en question ; et dans lequel
- le moyen de guidage (7) comporte au moins une surface partielle qui guide le flux d'air et présente une surface amortissant le bruit,
**caractérisé en ce que**
- la surface partielle et/ou le moyen de guidage (7) associé est réalisé(e) en une matière en mousse à pores ouverts,
- et **en ce que** la matière en mousse à pores ouverts est revêtue d'une matière en feuille.

2. Dispositif de distribution de flux d'air selon la revendication 1, **caractérisé en ce qu'**un corps (20) formant le moyen de guidage (7) est réalisé en une matière en mousse.

3. Dispositif de distribution de flux d'air selon l'une des revendications précédentes, **caractérisé en ce que** le moyen diviseur (4) de flux d'air est déplaçable de sorte que les sections d'entrée, agencées au niveau du moyen diviseur (4) de flux d'air, des canaux de sortie d'air (6) peuvent être modifiées.

4. Dispositif de distribution de flux d'air selon l'une des revendications précédentes, **caractérisé en ce que** le moyen diviseur (4) de flux d'air peut être déplacé de telle sorte que l'une des sections d'entrée des canaux de sortie d'air (6) peut être entièrement fermée, tandis que l'autre des sections d'entrée respective peut être entièrement ouverte.
